# FASCICULE DE BREVET EUROPEEN

(11) **EP 2 909 063 B1**
(45) Date de publication et mention de la délivrance du brevet: **26.07.2017**
(21) Numéro de dépôt: 13785530.0
(22) Date de dépôt: 08.10.2013
(51) Int. Cl.: B60R 22/18, B60R 22/26, B60N 2/68, B60N 2/433, B60N 2/015

(54) **DISPOSITIF ANTI-EJECTION D'ASSISE DE SIÈGE OU DE BANQUETTE INTÉGRÉ A UNE ATTACHE DE BOUCLE DE CEINTURE SÉCURITÉ**
IN EINEN SITZGURTSCHNALLENRIEGEL EINGEBAUTE ANTIAUSSTOSSVORRICHTUNG FÜR EINEN SITZABSCHNITT ODER EINE SITZBANK
ANTI-EJECTION DEVICE FOR A SEAT PORTION OR A BENCH SEAT, BUILT INTO A SEAT BELT BUCKLE LATCH

(30) Priorité: 16.10.2012 FR 1259845
(43) Date de publication de la demande: 26.08.2015
(73) Titulaire: PEUGEOT CITROËN AUTOMOBILES SA, 78140 Vélizy-Villacoublay (FR)
(72) Inventeur: GUILLOT, Herve, 78990 Elancourt (FR); DAVID, Eric, 92290 Chatenay Malabry (FR)
(74) Mandataire: Jeannin, Laurent Jean-Pierre
(86) Numéro de dépôt international: PCT/FR2013/052400
(87) Numéro de publication internationale: WO 2014/060680

(56) Documents cités:
- EP-A1- 0 375 636
- DE-A1- 10 223 742
- DE-A1- 10 348 348

## Description

L'invention se situe dans le domaine des sièges pour véhicules, par exemple pour véhicules automobiles. En particulier, elle s'adresse aux banquettes ou aux sièges équipés d'une ceinture de sécurité et dont l'assise est fixe, c'est-à-dire non relevable. L'invention s'adresse également aux véhicules dotés de tels sièges ou banquettes.

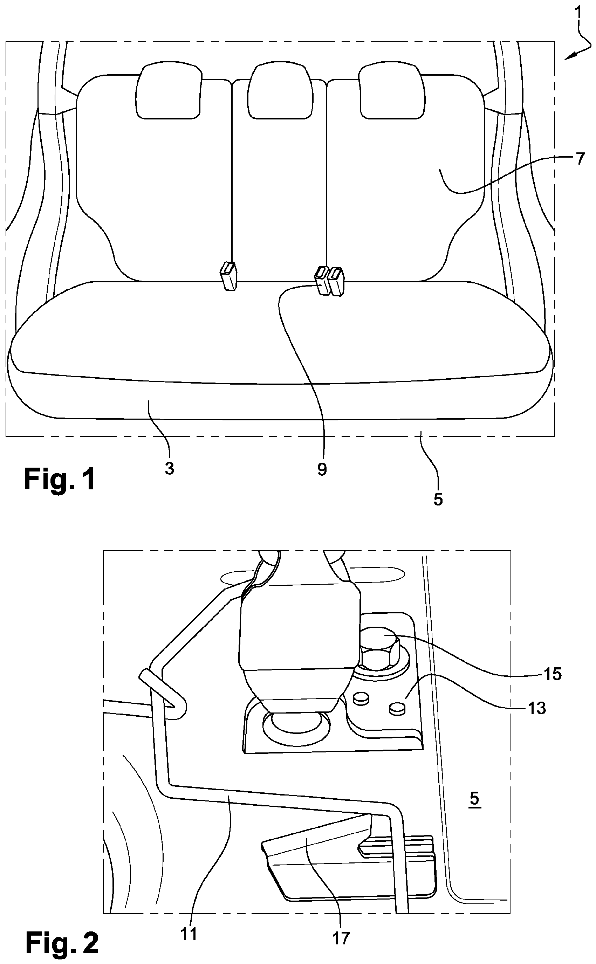

La figure 1 présente une banquette 1 arrière de véhicule dont l'assise 3 est fixée sur le plancher 5. L'assise 3 n'est pas relevable mais les dossiers 7 des sièges peuvent être rabattus sur l'assise 3 en vue d'augmenter l'espace de chargement arrière. La banquette 1 est dotée de ceintures de sécurité dont les boucles 9 sont fixées au plancher 5 au moyen d'attaches (non représentées). L'assise 3 des sièges comprend, de manière connue, une armature métallique, classiquement une structure filaire, qui est noyée dans la mousse du coussin.

Différents moyens et méthodes de fixation d'une assise sur un plancher de véhicule sont connus de l'homme du métier. Par exemple, le document FR2946925 concerne un dispositif de solidarisation d'une assise au plancher d'un véhicule comprenant un verrou dont le corps est assemblé au plancher et dont un pêne élastiquement mobile dans le corps du verrou est apte à verrouiller une gâche assemblée à l'assise.

Lors d'un choc frontal, il a été constaté que la banquette avait tendance à se déplacer longitudinalement vers l'avant du véhicule sous l'action de son propre poids. Cette avancée étant préjudiciable à la sécurité des passagers, il est connu de placer un dispositif anti-éjection qui retient l'assise ou du moins limite son déplacement vers l'avant du véhicule.

La figure 2 illustre un tel dispositif selon l'art antérieur. Pour des raisons de clarté de la figure, seule la structure filaire 11 de l'assise a été représentée, et non pas la mouse du coussin. La boucle de ceinture de sécurité est fixée au plancher 5 du véhicule par une attache 13. Habituellement, l'attache 13 du brin de boucle de ceinture de sécurité est une pièce en acier fixée au plancher par le biais d'une vis 15. Le dispositif anti-éjection 17, également nommé anti-burst, est constitué d'une pièce métallique pliée et soudée au plancher 5 et pouvant être située à proximité de cette attache 13. Cette pièce forme un crochet disposé en regard de la structure filaire 11 de l'assise, en avant de celle-ci selon le sens longitudinal du véhicule. Généralement, deux dispositifs anti-éjection 17 sont associés à une banquette arrière fixe comprenant trois places assises.

Lors d'un choc, l'assise se déplace par inertie vers l'avant du véhicule selon une direction longitudinale. La structure filaire 11 de l'assise se déplace jusqu'à entrer en contact avec les dispositifs 17 anti-éjection. Le crochet du dispositif 17 s'ouvre en effet en direction de la structure filaire 11 et est dimensionné pour que l'entrefer qu'il présente puisse recevoir le fil de la structure filaire 11 qui est placé en regard. Les dispositifs 17 anti-éjection harponnent l'assise par sa structure filaire 11 et stoppent ainsi son avancée. L'assise est maintenue en position, et la sécurité de l'occupant est préservée. On notera au passage qu'afin de faciliter la coopération entre le dispositif anti-éjection 17 et la structure filaire 11, un ajour est réalisé de manière ponctuelle dans la mousse, dégageant une portion d'un fil de la structure filaire qui dépasse donc localement de la mousse.

La problématique visant à retenir l'assise d'un siège en place lors d'un choc connait de multiples autres solutions. Par exemple, le document FR2961757 se rapporte à un dispositif de verrouillage destiné à retenir contre le plancher du véhicule, l'assise d'un siège escamotable par pivotement autour d'un axe transversal situé à l'avant. Le dispositif comprend une masselotte mobile en cas de choc et qui va venir appuyer sur une partie libre de l'armature de l'assise de manière à l'empêcher de s'écarter du plancher. Néanmoins, on comprendra que si cette solution est particulièrement adaptée aux sièges escamotables, elle ne répond pas à la problématique de l'avancée de l'assise d'un siège fixe.

L'un des inconvénients rencontrés par les dispositifs connus est qu'ils nécessitent la mise en oeuvre de pièces supplémentaires. Ceci génère des coûts en termes de temps de montage et en termes de coûts liés à l'achat ou à la production de ces pièces. Par ailleurs, l'ajout de pièces augmente le poids global du véhicule et donc sa production de CO₂.

Le document DE 103 48 348 divulgue une attache de ceinture de sécurité comprenant une platine d'ancrage au plancher d'un véhicule et au moins un bras s'étendant vers le haut et destiné à être relié à un dispositif de verrouillage d'une ceinture de sécurité.

L'invention a pour objectif de répondre à au moins un des inconvénients de l'art antérieur. En particulier, l'invention a pour objectif de proposer un nouveau dispositif anti-éjection réduisant le temps de montage. Un autre objectif de l'invention est de limiter le poids présenté par un tel dispositif anti-éjection.

A cet effet, l'invention a pour objet une attache de ceinture de sécurité comprenant une platine d'ancrage au plancher d'un véhicule et au moins un bras s'étendant vers le haut et destiné à être relié à un dispositif de verrouillage d'une ceinture de sécurité remarquable en ce qu'elle présente sur au moins un de ses bras, au moins un crochet formant un entrefer et configuré pour être disposé en regard d'un fil de structure d'une assise de siège ou de banquette, de sorte qu'un déplacement longitudinal de l'assise en direction du ou des crochets, place le fil dans l'entrefer du ou desdits crochets.

Selon des modes particuliers de réalisation, l'ensemble peut comprendre une ou plusieurs des caractéristiques suivantes, prises isolément ou selon toutes les combinaisons techniquement possibles :
- L'entrefer du ou des crochets est dimensionné pour être au moins égal au diamètre du fil qu'il est destiné à recevoir.
- Le ou les crochets sont configurés pour s'ouvrir en direction de l'arrière du véhicule lorsque l'attache est ancrée sur le plancher dudit véhicule.
- Au moins un crochet est disposé sur une extension d'au moins un bras s'étendant en avant de l'attache selon le sens longitudinal du véhicule et formant un retour.
- Au moins un crochet est formé par une protubérance disposée sur l'arrière d'un bras de l'attache, selon le sens longitudinal du véhicule.
- L'attache est en acier.

L'invention a également pour objet un ensemble comprenant au moins une attache telle que définie plus haut et une assise de siège comprenant une structure filaire dont au moins une portion de fil n'est pas recouvert de mousse, remarquable en ce que l'attache et l'assise sont disposées l'une par rapport à l'autre de manière à ce que le fil de l'assise soit placé en regard d'un crochet de l'attache.

Avantageusement, l'attache et l'assise sont agencées l'une par rapport à l'autre de manière à ce qu'en conditions normales de roulage du véhicule, le fil de l'assise et le ou les crochets de la ou des attaches ne soient pas en contact, de préférence le fil et le ou les crochets sont disposés à une distance l'un de l'autre d'environ 10 mm.

L'invention a encore pour objet une assise pour siège ou banquette de véhicule remarquable en ce qu'elle comprend au niveau d'un puits ou d'une échancrure destinée à recevoir au moins une attache de boucle de ceinture de sécurité au moins une portion de fil de sa structure filaire non recouvert de mousse, la ou lesdites portions de fils étant agencées pour se placer en regard de crochets portés par la ou lesdites attaches.

L'invention a enfin pour objet un véhicule remarquable en ce qu'il comprend une attache et/ou un ensemble et/ou une assise de siège ou de banquette tels que définis plus haut.

Comme on l'aura compris à la lecture de la définition qui vient d'en être donnée, l'invention consiste à utiliser les attaches de boucle de ceintures de sécurité comme dispositif anti-éjection. L'invention consiste à modifier la forme des attaches de ceintures de sécurité afin de leur permettre d'assurer la double fonction d'attache de ceinture de sécurité et de dispositif anti-éjection. L'invention permet de supprimer les dispositifs anti-éjection connus qui étaient des pièces spécialement ajoutées à cet effet, en déportant leur fonction sur des pièces voisines. En donnant une double fonction à une attache de boucle de sécurité, l'invention permet un gain en termes de temps de montage du véhicule. Avantageusement, l'invention permet d'alléger le véhicule du poids des dispositifs anti-éjections. L'invention propose un dispositif anti éjection intégré à l'attache de boucle de ceinture de sécurité.

L'invention sera bien comprise et d'autres aspects et avantages apparaitront clairement au vu de la description qui suit donnée à titre d'exemple en référence aux planches de dessins annexées sur lesquelles :
- la figure 1 représente une banquette à laquelle s'applique l'invention ;
- la figure 2 représente un dispositif anti-éjection selon l'art antérieur ;
- la figure 3 représente un dispositif anti-éjection selon un premier mode de réalisation de l'invention ;
- la figure 4 représente un dispositif anti-éjection selon un deuxième mode de réalisation de l'invention.

Sur les différentes figures les mêmes références désignent des éléments identiques ou similaires.

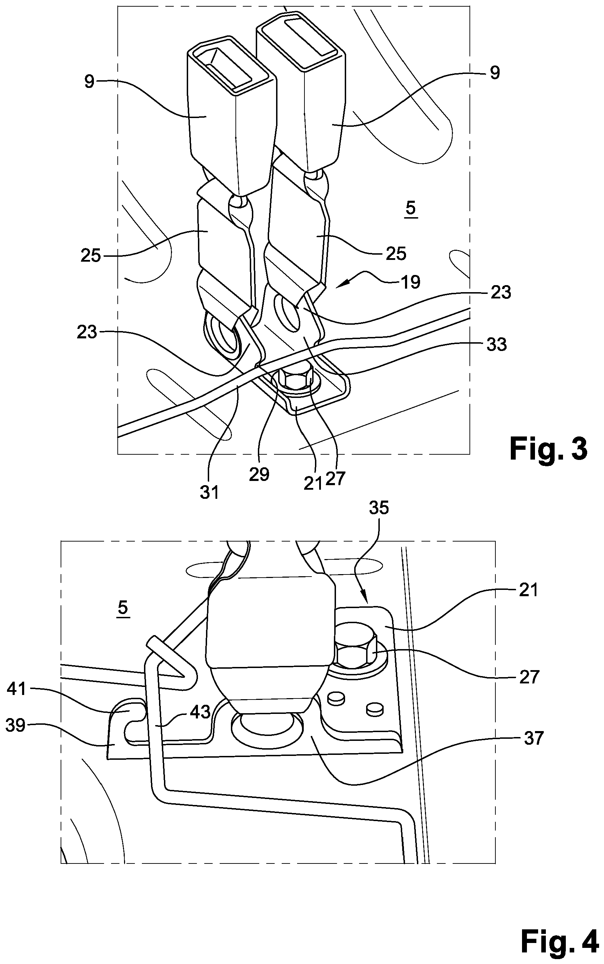

Les figures 1 et 2 ayant été commentées en partie introductive, on se référera à présent à la figure 3 représentant un premier exemple de réalisation de l'invention.

Sur la figure 3 est représentée une attache 19 de boucle de ceinture de sécurité selon l'invention. Cette attache 19 est en métal et de préférence en acier. Elle comprend une platine d'ancrage 21 au plancher 5 d'un véhicule et au moins un bras, ici deux bras 23, s'étendant sensiblement verticalement vers le haut. Les boucles 9 de ceinture de sécurité sont reliés aux bras 23 par le biais de bandes flexibles 25 ou brins. L'attache 19 est fixée sur le plancher du véhicule par exemple au moyen d'une vis 27.

L'invention est remarquable en ce que la forme de l'attache 19 de boucle de ceinture de sécurité est configurée pour lui permettre d'assurer la fonction de dispositif anti-éjection en plus de la fonction d'ancrage de la boucle de ceinture de sécurité. A cet effet, l'attache comprend sur au moins un de ses bras, et de préférence, sur ses deux bras, un crochet 29 destiné à être placé en regard d'une portion de fil 31 de la structure filaire d'une assise de siège. L'attache 19 et l'assise sont prévues pour que le crochet 29 s'ouvre en direction de ce fil, lorsque ladite assise est fixée en position sur ledit plancher 5.

Dans sa forme la plus simple, le crochet 29 est formé par une protubérance 33 saillante sur l'arrière du ou des bras 23 de l'attache 19 de façon à délimiter un entrefer entre ladite protubérance 33 et la platine d'ancrage 21. La hauteur de cet entrefer est choisie pour être au moins égale au diamètre du fil qu'il est destiné à recevoir. Optionnellement, sa profondeur est également au moins égale au diamètre du fil qu'il est destiné à recevoir.

Afin que le ou les crochets 29 puissent être disposés en regard d'une portion de fil de la structure filaire de l'assise, celle-ci doit s'étendre en arrière de l'attache 19. L'homme du métier aura donc avantage à utiliser une assise présentant un puits au travers duquel passe la boucle de sécurité. Sur la figure 3, même si la mousse de l'assise n'est pas représentée et que seule une portion de sa structure filaire interne est reproduite, on comprend que l'assise employée présente un puits traversé par la boucle de sécurité puisqu'une portion de la structure filaire passe en arrière de ladite attache. Des assises de sièges dotées d'un tel puits sont connues de l'homme du métier. Néanmoins à la différence des assises connues, l'assise selon l'invention présente une portion d'un fil de sa structure filaire qui est non recouverte de mousse au sein de ce puits. Cette portion de fil est agencée pour être placée en regard du ou des crochets de l'attache.

On comprend que pour éviter de générer des bruits inopportuns dans les conditions normales d'utilisation et de roulage du véhicule, le fil et l'attache sont agencés pour être placés à distance l'un de l'autre de sorte à ne pas être en contact. Par exemple le fil et le crochet de l'attache présentent un écartement d'environ 10 mm.

Lors d'un choc frontal, l'assise du siège va se déplacer longitudinalement et le fil va venir se loger dans le ou les crochets présentés par l'attache. L'attache va ainsi harponner l'assise du siège et limiter son déplacement.

La figure 4 présente un deuxième mode de réalisation de l'invention qui peut être alternatif ou complémentaire au premier mode. Dans ce mode de réalisation, l'attache 35 présente un seul bras 37. Ce bras présente une extension 39 s'étendant vers l'avant selon la direction longitudinale du véhicule. L'extension forme un retour de manière à contourner une portion de fil de la structure de l'assise. Le retour forme une butée destinée à retenir le fil. Avantageusement, ce retour forme un crochet 41 ouvert en direction de l'arrière du véhicule. Comme dans l'exemple précédent le crochet est dimensionné pour recevoir le fil 43. La forme de crochet plutôt que de simple butée est préférée dans le cadre de l'invention en ce qu'elle limite également un éventuel écartement de l'assise du plancher vers le haut lors d'un choc. Si ce deuxième mode de réalisation, permet d'éviter le montage d'une pièce uniquement dédiée à former un dispositif anti-éjection, la surface développée de la ferrure est plus importante que dans l'exemple précédent, ce qui diminue le gain en poids de l'ensemble.

Cette attache est néanmoins avantageuse en ce qu'elle permet de coopérer aussi bien avec des assises dont le passage pour la boucle de ceinture de sécurité se présente sous forme de puits ou sous forme d'échancrure sur le bord de l'assise. L'homme du métier prendra soin à ce qu'une portion de fil de la structure dénudé, c'est-à-dire non recouvert de mousse, soit disposée en regard de l'ouverture du crochet en arrière de celui-ci selon le sens longitudinal du véhicule.

Une banquette arrière de véhicule présentant généralement trois places assises et donc trois ceintures de sécurité arrière, l'invention permet dont de pourvoir un tel véhicule avec deux ou trois dispositifs anti anti-éjection. Chaque attache de boucle de ceinture de sécurité pouvant être pourvue d'au moins un dispositif anti-éjection.

## Revendications

1. Attache (19, 35) de ceinture de sécurité comprenant une platine d'ancrage (21) au plancher d'un véhicule et au moins un bras (23, 37) s'étendant vers le haut et destiné à être relié à un dispositif de verrouillage (9) d'une ceinture de sécurité **caractérisée en ce qu'**elle présente sur au moins un de ses bras (23, 37), au moins un crochet (29, 41) formant un entrefer et configuré pour être disposé en regard d'un fil (31, 43) de structure d'une assise de siège ou de banquette, de sorte qu'un déplacement longitudinal de l'assise en direction du ou des crochets (29, 41), place le fil (31, 43) dans l'entrefer dudit ou desdits crochets (29, 41).

2. Attache (19, 35) selon la revendication 1 **caractérisée en ce que** l'entrefer du ou des crochets (29, 41) est dimensionné pour être au moins égal au diamètre du fil (31, 43) qu'il est destiné à recevoir.

3. Attache (19, 35) selon l'une des revendications 1 ou 2 **caractérisée en ce que** le ou les crochets (29, 41) sont configurés pour s'ouvrir en direction de l'arrière du véhicule lorsque l'attache (19, 35) est ancrée sur le plancher dudit véhicule.

4. Attache (35) selon l'une des revendications 1 à 3 **caractérisée en ce qu'**au moins un crochet (41) est disposé sur une extension (39) d'au moins un bras (37) s'étendant en avant de l'attache (35) selon le sens longitudinal du véhicule et formant un retour.

5. Attache (19) selon l'une des revendications 1 à 4 **caractérisée en ce qu'**au moins un crochet (29) est formé par une protubérance (33) disposée sur l'arrière d'un bras (23) de l'attache (19), selon le sens longitudinal du véhicule.

6. Attache (19, 35) selon l'une des revendications 1 à 5 **caractérisée en ce qu'**elle est en acier.

7. Ensemble comprenant au moins une attache (19, 35) selon l'une des revendications 1 à 6 et une assise de siège ou de banquette comprenant une structure filaire dont au moins une portion de fil (31, 43) n'est pas recouvert de mousse **caractérisé en ce que** l'attache (19, 35) et l'assise sont disposées l'une par rapport à l'autre de manière à ce que le fil (31, 43) de l'assise soit placé en regard d'un crochet (29, 41) de l'attache (19, 35).

8. Ensemble selon la revendication 7 **caractérisé en ce que** l'attache (19, 35) et l'assise sont agencées l'une par rapport à l'autre de manière à ce qu'en conditions normales de roulage du véhicule, le fil (31, 43) de l'assise et le ou les crochets (29, 41) de la ou des attaches (19, 35) ne soient pas en contact, de préférence le fil (31, 43) et le ou les crochets sont disposés à une distance l'un de l'autre d'environ 10 mm.

9. Assise de siège ou de banquette de véhicule comprenant un puits ou une échancrure destiné à recevoir au moins une attache (19, 35) de boucle de ceinture de sécurité, **caractérisée en ce qu'**elle comprend, en outre, au niveau du puits ou de l'échancrure, au moins une portion de fil (31, 43) de sa structure filaire non recouvert de mousse, la ou lesdites portions de fils (31, 43) étant agencées pour se placer en regard de crochets (29, 41) portés par la ou lesdites attaches (19, 35).

10. Véhicule **caractérisé en ce qu'**il comprend une attache (19, 35) selon l'une des revendications 1 à 6, et/ou un ensemble selon la revendication 7 ou 8, et/ou une assise de siège ou de banquette selon la revendication 9.

## Patentansprüche

1. Sitzgurtschnallenriegel (19, 35), der eine Platte (21) zum Verankern auf dem Fußboden eines Fahrzeugs und mindestens einen Arm (23, 37), der sich nach oben erstreckt und dazu bestimmt ist, mit einer Verriegelungsvorrichtung (9) eines Sicherheitsgurts verbunden zu sein, umfasst, **dadurch gekennzeichnet, dass** er auf mindestens einem seiner Arme (23, 37) mindestens einen Haken (29, 41) aufweist, der einen Luftspalt bildet und konfiguriert ist, um gegenüber einem Strukturdraht (31, 43) einer Sitz- oder Sitzbankfläche derart angeordnet zu sein, dass eine Längsbewegung der Sitzfläche in Richtung des oder der Haken (29, 41) den Draht (31, 43) in den Luftspalt des oder der Haken (29, 41) platziert.

2. Sitzgurtschnallenriegel (19, 35) nach Anspruch 1, **dadurch gekennzeichnet, dass** der Luftspalt des oder der Haken (29, 41) bemessen ist, um mindestens gleich dem Durchmesser des Drahts (31, 43), den er aufnehmen soll, zu sein.

3. Sitzgurtschnallenriegel (19, 35) nach einem der Ansprüche 1 oder 2, **dadurch gekennzeichnet, dass** der oder die Haken (29, 41) konfiguriert sind, um sich in Richtung der Rückseite des Fahrzeugs zu öffnen, wenn der Sitzgurtschnallenriegel (19, 35) auf dem Fußboden des Fahrzeugs verankert ist.

4. Sitzgurtschnallenriegel (35) nach einem der Ansprüche 1 bis 3, **dadurch gekennzeichnet, dass** mindestens ein Haken (41) auf einer Erweiterung (39) mindestens eines Arms (37), der sich vor dem Sitzgurtschnallenriegel (35) entlang der Längsrichtung des Fahrzeugs erstreckt und einen Rücklauf bildet, angeordnet ist.

5. Sitzgurtschnallenriegel (19) nach einem der Ansprüche 1 bis 4, **dadurch gekennzeichnet, dass** mindestens ein Haken (29) von einem Vorsprung (33), der auf der Rückseite eines Arms (23) des Sitzgurtschnallenriegels (19) gemäß der Längsrichtung des Fahrzeugs angeordnet ist, gebildet wird.

6. Sitzgurtschnallenriegel (19, 35) nach einem der Ansprüche 1 bis 5, **dadurch gekennzeichnet, dass** er aus Stahl besteht.

7. Baugruppe, die mindestens einen Sitzgurtschnallenriegel (19, 35) nach einem der Ansprüche 1 bis 6 und eine Sitz- oder Sitzbankfläche umfasst, die eine Drahtstruktur umfasst, von der mindestens ein Drahtabschnitt (31, 43) nicht mit Schaumstoff bezogen ist, **dadurch gekennzeichnet, dass** der Sitzgurtschnallenriegel (19, 35) und die Sitzfläche zueinander derart angeordnet sind, dass der Draht (31, 43) der Sitzfläche gegenüber einem Haken (29, 41) des Sitzgurtschnallenriegels (19, 35) platziert ist.

8. Baugruppe nach Anspruch 7, **dadurch gekennzeichnet, dass** der Sitzgurtschnallenriegel (19, 35) und die Sitzfläche zueinander derart eingerichtet sind, dass der Draht (31, 43) der Sitzfläche und der oder die Haken (29, 41) des oder der Sitzgurtschnallenriegel (19, 35) unter normalen Fahrbedingungen des Fahrzeugs nicht in Berührung sind, wobei der Draht (31, 43) und der oder die Haken in einem Abstand von etwa 10 mm voneinander angeordnet sind.

9. Fahrzeugsitz- oder -sitzbankfläche, die einen Schacht oder eine Aussparung umfasst, der/die dazu bestimmt ist, mindestens einen Sitzgurtschnallenriegel (19, 35) aufzunehmen, **dadurch gekennzeichnet, dass** sie außerdem im Bereich des Schachts oder der Aussparung mindestens einen Drahtabschnitt (31, 43) ihrer Drahtstruktur, die nicht mit Schaumstoff bezogen ist, umfasst, wobei der oder die Drahtabschnitte (31, 43) eingerichtet sind, um sich gegenüber von Haken (29, 41), die von dem oder den Sitzgurtschnallenriegel(n) (19, 35) getragen werden, zu platzieren.

10. Fahrzeug, **dadurch gekennzeichnet, dass** es einen Sitzgurtschnallenriegel (19, 35) nach einem der Ansprüche 1 bis 6 und/oder eine Baugruppe nach Anspruch 7 oder 8 und/oder eine Sitz- oder Sitzbankfläche nach Anspruch 9 umfasst.

## Claims

1. A seat belt latch (19, 35) including an anchoring plate (21) on the floor of a vehicle and at least one arm (23, 37) extending upward and intended to be connected to a device (6) for locking a seat belt, **characterized in that** it has on at least one of its arms (23, 37), at least one hook (29, 41) forming an air gap and configured to be arranged facing a structural wire (31, 43) of a seat portion of a seat or bench seat, such that a longitudinal movement of the seat portion in the direction of the hook or hooks (29, 41), places the wire (31, 43) in the air gap of the said hook or hooks (29, 41).

2. The latch (19, 35) according to Claim 1, **characterized in that** the air gap of the hook or hooks (29, 41) is dimensioned so as to be at least equal to the diameter of the wire (31, 43) which it is intended to receive.

3. The latch (19, 35) according to one of Claims 1 or 2, **characterized in that** the hook or hooks (29, 41) are configured to open in the direction of the rear of the vehicle when the latch (19, 35) is anchored on the floor of said vehicle.

4. The latch (35) according to one of Claims 1 to 3, **characterized in that** at least one hook (41) is disposed on an extension (39) of at least one arm (37) extending in front of the latch (35) along the longitudinal direction of the vehicle and forming a return.

5. The latch (19) according to one of Claims 1 to 4, **characterized in that** at least one hook (29) is formed by a protuberance (33) disposed on the rear of an arm (23) of the latch (19), along the longitudinal direction of the vehicle.

6. The latch (19, 35) according to one of Claims 1 to 5, **characterized in that** it is made of steel.

7. An assembly including at least one latch (19, 35) according to one of Claims 1 to 6, and a seat portion of a seat or bench seat including a wire structure, at least one wire portion (31, 43) of which is not covered by foam, **characterized in that** the latch (19, 35) and the seat portion are disposed one with respect to the other such that the wire (31, 43) of the seat portion is placed facing a hook (29, 41) of the latch (19, 35).

8. The assembly according to Claim 7, **characterized in that** the latch (19, 35) and the seat portion are arranged one with respect to the other such that under normal running conditions of the vehicle, the wire (31, 43) of the seat portion and the hook or hooks (29, 41) of the latch or latches (19, 35) are not in contact, preferably the wire (31, 43) and the hook or hooks are disposed at a distance of approximately 10 mm from one another.

9. A seat portion of a seat or bench seat of a vehicle including a well or an indentation intended to receive at least one seat belt buckle latch (19, 35), **characterized in that** it includes, furthermore, at the level of the well or of the indentation, at least one wire portion (31, 43) of its wire structure not covered by foam, the said wire portion or portions (41, 43) being arranged to be positioned facing hooks (29, 41) carried by the said latch(es) (19, 35).

10. A vehicle **characterized in that** it includes a latch (19, 35) according to one of Claims 1 to 6, and/or an assembly according to Claim 7 or 8, and/or a seat portion of a seat or bench seat according to Claim 9.
